Europäisches Patentamt

(19) European Patent Office

Office européen des brevets

(11) Publication number: **0 065 048**
**B1**

(12) **EUROPEAN PATENT SPECIFICATION**

(45) Date of publication of patent specification: **10.04.85**

(21) Application number: **81302233.2**

(22) Date of filing: **19.05.81**

(51) Int. Cl.⁴: **F 24 J 2/44**

(54) **System and method for heating a liquid by solar heat.**

(43) Date of publication of application:
**24.11.82 Bulletin 82/47**

(45) Publication of the grant of the patent:
**10.04.85 Bulletin 85/15**

(84) Designated Contracting States:
**AT BE CH DE FR GB IT LI LU NL SE**

(56) References cited:
**DE-A-2 727 176**
**DE-A-3 009 305**
**US-A-2 230 917**
**US-A-2 761 656**
**US-A-4 061 131**
**US-A-4 108 160**
**US-A-4 240 405**

(73) Proprietor: **Brekke, Carroll Ellerd**
**6130 Monterey Road, No. 83**
**San Jose California 95138 (US)**

(72) Inventor: **Brekke, Carroll Ellerd**
**6130 Monterey Road, No. 83**
**San Jose California 95138 (US)**

(74) Representative: **Diamond, Bryan Clive et al**
**Gee & Co. Chancery House Chancery Lane**
**London WC2A 1QU (GB)**

Courier Press, Leamington Spa, England.

## Description

This invention relates to a solar heating system for heating water for home and commercial hot water systems, recreational pools and the like.

The basic reason for utilizing a solar heating system is to minimize the use of other power sources, such as electricity or gas, while still obtaining the desired heating. In most solar heating systems, however, it is necessary to provide a pump, which is generally driven by electricity, for pumping liquid up from a water heat exchange system, a swimming pool or the like to a solar array on the roof of a house, or, in any event, somewhat vertically above the fluid which is being heated. This is wasteful, and it is desirable to provide a solar heating system which would operate adequately without a separately powered pump.

Some attempts have been made to utilize solar heat itself for pumping purposes in a solar heating system. For example, U.S. Patent 4,108,160 shows a thermosiphon type pump which intermittently pumps liquid downwardly in the daytime and draws up the liquid at night; thus, continuous up-and-down circulation does not occur, and the solar collector and its support structure must be large enough and strong enough to hold substantially all of the liquid in the entire system, and the roof of a building upon which the solar collector is placed must be strong enough to support the collector. Alternatively the solar collector must be periodically covered or shaded for the system to continuously pump water or other working fluid; this pumping system does not operate continuously without external control thereof. Such control can require the user of the solar heating system to climb up on the roof of a house and periodically cover the solar collector, which is highly inconvenient. Thus, completely automatic continuous operation, during the daytime, is not attained unless some type of automatic shading system is designed and added; and operation of such a shading system would inherently require energy expenditures.

Solar heat has been used to lift liquid by means of pressure differentials controlled by float valves with the working liquid being vaporized by the sun's heat. Such systems are shown in U.S. Patents 2,230,917 and 4,061,131.

The latter patent shows (a) a solar heat collector capable of containing a liquid, and conduits for connecting the collector to (b) a heat exchanger or a pool of liquid whereby a liquid can be heated in the collector and circulated through the conduits so as to be cooled and thereby to heat a liquid in said heat exchanger or pool of liquid, the collector being placed at a level above the heat exchanger or pool, whereby the liquid forms vapour within the collector when the collector is heated by the sun, and (c) one of said conduits is provided for containing a column of said first liquid, the top of said column being in communication with the interior of the collector, whereby the vapour is able to lift cooled liquid from the heat exchanger or pool to a condenser.

However in such systems it has been necessary to utilise a low-boiling fluid as the heat transfer medium. Should any failure occur between the heat transfer system and the system to which heat is being transferred, potentially dangerous leakage can occur. Further, such systems are clearly not useful wherein the heat transfer liquid itself is discharged into a recreational pool such as a swimming pool and is also lifted therefrom to the solar collector.

While the percolator pumping system (using vapor to lift water) is well-known for extracting coffee beans, and has been used in air-conditioning units with the use of external water for cooling the condensor, as disclosed, for example, in U.S. Patent 2,761,656, such a system has not been adapted to solar heating, particularly since the solar collector portion of a solar heating system is generally considerably above the fluid being heated thereby, and it is not readily apparent that such a percolator system can be practically adapted for use with a solar heating system.

It would be advantageous to provide a percolator pumping system as part of a solar heating system, wherein the solar heating system would not require an externally powered pump, could operate with relatively non-volatile fluids such as water as a working fluid, could operate continuously during daytime, and did not require periodic attention such as covering or uncovering of the solar collector panel.

According to the present invention, I provide a solar heating system of the aforesaid in type (as disclosed in U.S. Patent 4,061,131) characterised in that the system includes means for keeping the interior of the collector at a reduced pressure such that the liquid therein forms said vapour, said means consisting of a second heat exchanger arranged above the collector for condensation of said vapour produced in the collector and at least one lift tube communicating at its lower end with the top of another of said conduits and with the top of the interior of the collector and at its upper end with the condensing heat exchanger.

The solar heating system may, in different embodiments, be connected to heat a hot water system or a swimming pool. The system does not require the use of a separately powered pump, but instead makes use only of solar energy. The system also does not require constant adjustment such as by covering the collector, or by carefully selecting the location of the collector. Further, the system can utilize water as the working liquid (rather than more volatile, and at times dangerous, low-boiling liquids), and so an open system can be utilized wherein the water from the solar collector passes directly into a swimming pool or the like and wherein the swimming pool water is pumped into the system and forms a part of the circulating loop.

The system can of course be sold as a kit of the aforesaid parts (a), (c), (d) and (e), and (b) where appropriate, with instructions for assembly and use.

The invention will be illustrated by reference to some embodiments shown in the drawings, wherein like numbers denote like parts throughout, and wherein:—

Figs. 1A and 1B illustrate, in schematic view in two different stages of operation, a first embodiment of solar heating system in accordance with the invention;

Fig. 2 illustrates, in similar view to Fig. 1A, a second embodiment of the invention;

Fig. 3 shows part of a modification of the system of Fig. 1; and

Fig. 4 illustrates, partially in similar view to Fig. 1A, and partially perspectively, a fifth embodiment of the invention.

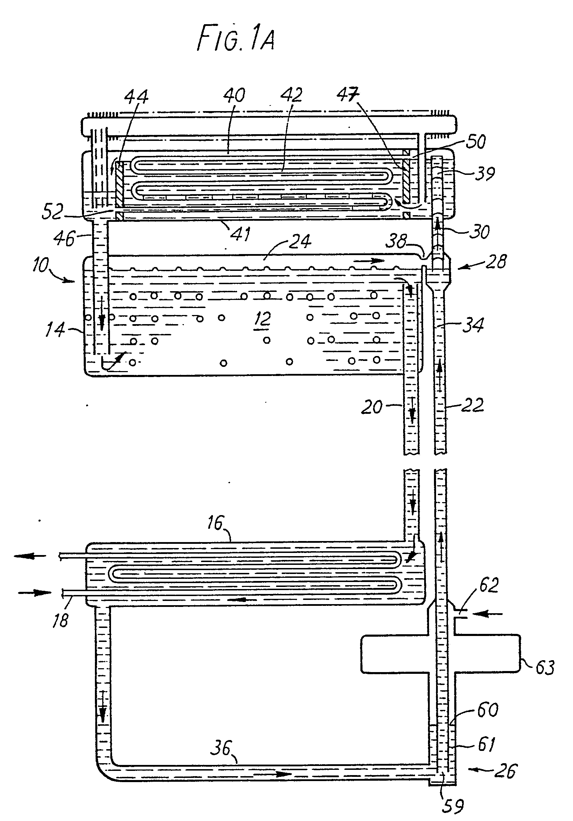

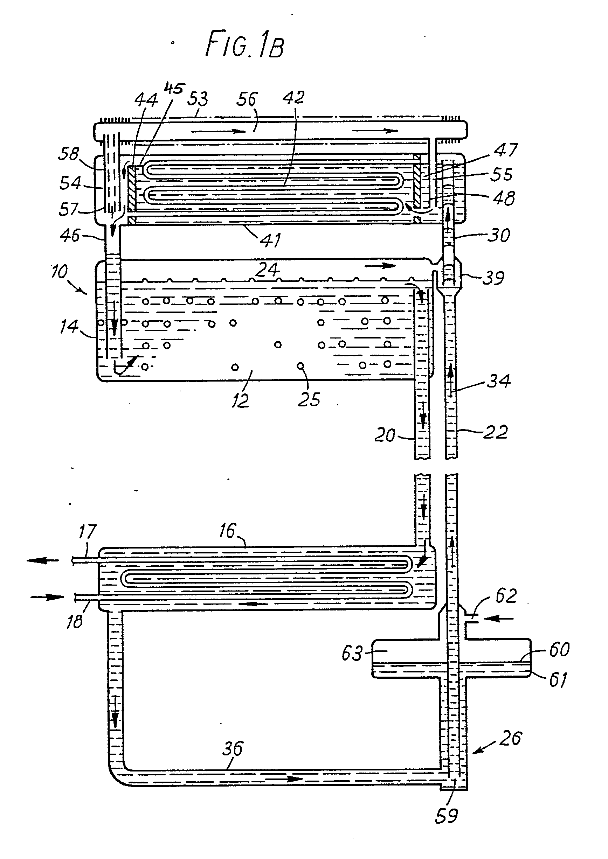

Referring to Figs. 1A and 1B, there is illustrated therein a solar heating system 10 having therein a working liquid 12 which is usually water, optionally containing an antifreeze additive such as ethylene glycol. The solar heating system 10 includes a solar heat collector 14 and a heat exchanger 16. Separately, a fluid 17 (e.g. water) is flowed, as. indicated by arrows, through piping 18 within heat exchanger 16 wherein heat is transferred from the liquid 12 to the fluid in the piping 18. The heat exchanger 16 can be tubing within a large body of liquid, e.g. a recreational pool. A conduit 20 served for conducting heated liquid 12 from the collector 14 to the heat exchanger 16, and a second conduit 22 serves for returning the liquid from the heat exchanger 16, after it has been cooled therein, to the heat collector 14.

Means, as described below, are provided for maintaining the collector 14 at a pressure below atmospheric pressure, such that the liquid 12 therein boils therein and produces a vapor 24 at a temperature below the boiling point of the liquid 12 at atmospheric pressure. Bubbles 25 of hot vapor are shown within the boiling liquid.

The second conduit 22 proceeds from a level 26 to a vertically higher level 28 in the system 10. A lift tube 30 is positioned in liquid flow communication with a column of liquid 34 within the second conduit 22 and thereby effectively serves as a continuation of the column 34. Means are provided for bubbling the vapor 24 upwardly through the lift tube 30 so as to produce a force which lifts the cooled liquid 12 from the heat exchanger 16 via a recycling conduit 36 to a position above the heat collector 14. As illustrated, the bubbling means includes a passage 38 from the heat collector 14 to a top end 39 of the column 30. As shown in Fig. 1A, bubbles of hot vapor (e.g. steam) alternate in the tube 30 with short columns of the liquid 12 (e.g. water). The top end 39 of the column 34 is in gas flow communication, via a top portion 40 of a condenser 41, with the heat collector 14.

Above the heat collector 14, a condenser 41 is arranged for receiving the cooled liquid 12 which passes upwardly through the liquid column 34 and for condensing the vapor 24 by requiring it to pass through condenser tubing 42 which is below the surface of the liquid 12 within the condenser 41. A dam 44 serves to retain sufficient of the liquid 12 in the condenser 41 so as to properly cover sufficient of the tubing 42 to accomplish the condensing function on the vapor 24. A conduit 46 serves to conduct the liquid 12, after it has passed over the dam 44, to the heat collector 14. A further dam 47 defines, with the condenser 41, a reservoir 48 into which passes the cooled liquid 12 from the lift tube 30. The heat exchange tubing 42 is within the reservoir 48 and is connected to receive the vapor 24 which leaves the lift tube 30 via an entrance 50 of the tubing 42. The condensate within the heat exchange tubing 42 is delivered via an exit 52 therefrom to the solar heat collector 14 via the conduit 46 as illustrated. The dam 44 serves to prevent the cooled liquid 12 from being conducted by the conduit 46 from the reservoir 48 to the solar heat collector 14 unless at least a selected amount of the cooled liquid 12, namely enough to go over the dam 44, is in the reservoir 48 (to keep a normal level 45).

Fig. 1A shows the position of the liquid 12 when the liquid is being moved up the lift tube 30. Fig. 1B indicates the situation which exists when the fluid passing through the piping 18 in the heat exchanger 16 has been heated to its desired temperature. In such an instance, heat is not sufficiently dissipated into the fluid flowing through the piping 18, and so pressure is built up within the condenser 41. To dissipate this, there is optionally provided an overload cooling chamber 56 which can communicate via end 57 of a tube 54 from the condenser 41. In the overload cooling chamber 56, the vapor 24 is cooled sufficiently to condense it, whereupon it flows downwardly through another end tube 55 and then passes via the reservoir 48, over the dam 44 and through the conduit 46 and into the collector 14. A perforate tubular member 58 is positioned within tube 54 to prevent flow stoppage. Excess heat is thereby automatically dissipated from cooling fins 53.

A lower end 59 of the second conduit 22 is beneath a surface 60 of a pool 61 of the liquid 12 and the surface 60 is exposed to the atmosphere, e.g. via a passage 62. An expanded portion 63 of the conduit serves to receive the liquid 12 in the overheated condition shown in Fig. 1B. The pressure exerted on the surface 60 is atmospheric pressure, whereas the pressure exerted at the top 39 of the column of liquid 34 is reduced below atmospheric pressure due to the column 34. Thus, a reduced pressure is provided within the system 10. This reduced pressure allows the liquid 12 to be boiled at a temperature below the temperature at which it would normally boil at atmospheric pressure. This temperature can be the maximum desired temperature of the liquid 12. Generally, the length of the column 34 is adjusted to be about 7.25 metres if the liquid 12 is water. The water then boils at an absolute pressure of about 0.255 bars, corresponding to about 66°C. As the height of column 34 decreases during operation, the boiling temperature increases, providing a self-adjusting feature. The rate of pumping likewise automatically adjusts dependent on the differential temperature between piping 18 and collector 14. External controls are, thus, unnecessary. The fluid passing through the tubing 18 is heated to about the reduced pressure boiling temperature. The top end 39 of the column 34 within the second conduit 22 is in communication with the solar heat collector 14 via the condenser 41 and thus maintains a lowered pressure therein in the manner just disclosed.

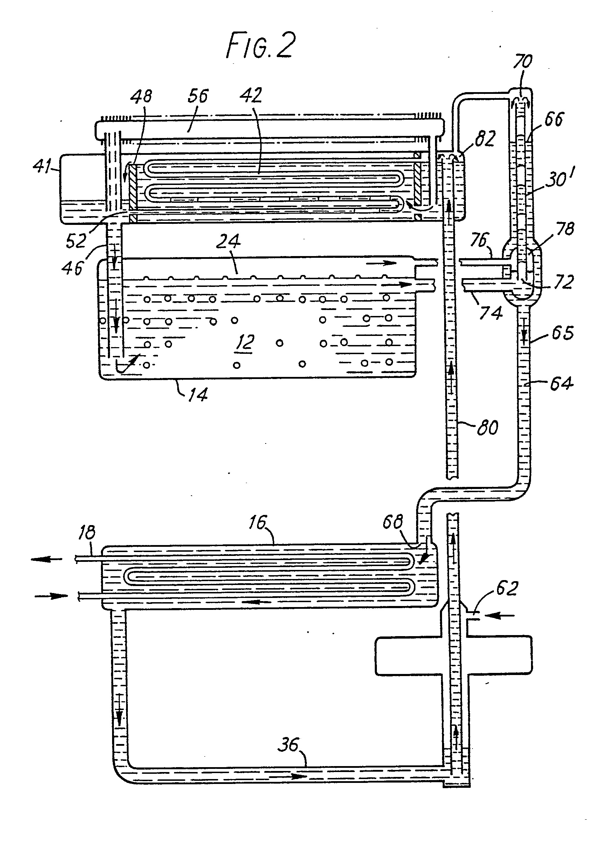

Referring now to Fig. 2, there is shown an embodiment in accordance with the present invention wherein a column 64 of the liquid 12 is located within a conduit 65 and extends from above the solar heat collector 14, namely from a top surface 66 thereof, downwardly to the heat exchanger 16 at a lower end 68 of the column 64. In this embodiment, a top end 70 of a lift tube 30' is in liquid flow communication with the top end 66 of the column 64 in the conduit 65. In particular, as liquid 12 flows out of the top end 70 of the lift tube 30', it falls downwardly and becomes a part of the column 64.

Meanwhile, a bottom end 72 of the lift tube 30' is in liquid flow communication with the solar heat collector 14 via a passage 74. Vapor 24, which is produced by boiling within the solar heat collector 14, passes via a passage 76 into a small chamber 78, wherein it lifts the warm liquid 12 which passes through the passage 74 upwardly through the lift tube 30'. This creates flow, as shown by the downward arrow in the column 64; this flow causes warm liquid to flow into the heat exchanger 16 wherein the piping 18, and thereby the fluid therein, is heated. Because of this percolation, flow proceeds downwardly via recycling conduit 36 and therefore upwardly through a conduit 80 and thence into a right hand chamber 82 in the condenser 41. From the right hand chamber 82 the liquid flows leftwardly into the reservoir 48 while the vapor flows through the tubing 42 and is condensed as in the embodiment of Fig. 1A. The other portions of the embodiment of Fig. 2 work in substantially the same manner as the embodiment of Fig. 1A.

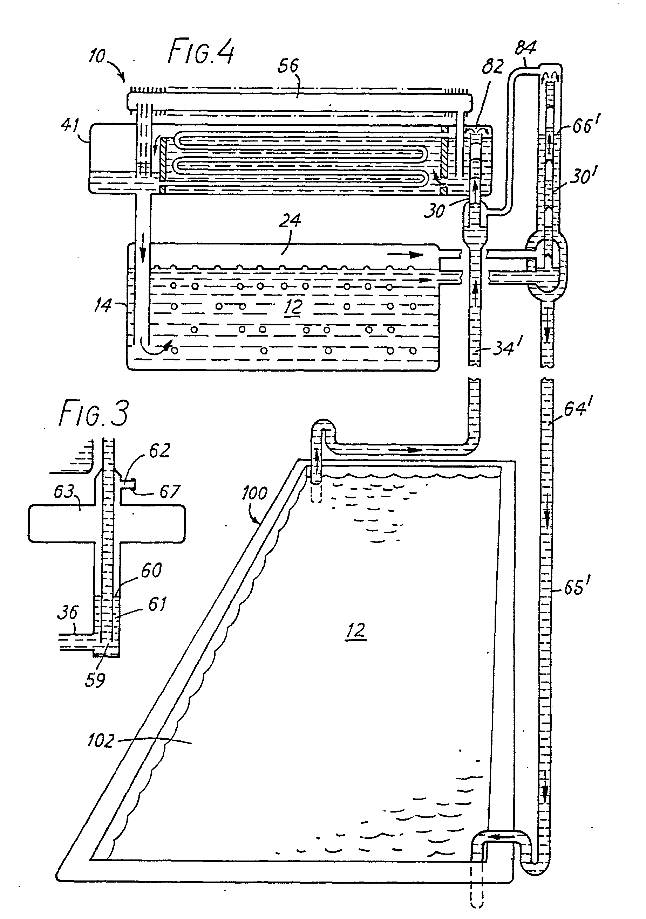

Fig. 3 shows a fragment of Figs. 1A and 1B, wherein the opening 62 has been closed by a cap 67, after the system has been installed. This provides a closed system having a permanent internal vacuum in the spaces 24 and 62 and enables the liquid 12 to have any desired composition, e.g., comprising ethylene glycol. The columns 34 and 36 can thereby be made as short as desired, allowing the system to be more compact, whilst still providing selected reduced pressure within the collector 14.

In setting up the system of any embodiment, almost all air must be removed from within the system before it is filled with the water or other liquid 12.

The collector 14 can in all embodiments be simply constructed from two sheets of corrugated metal (e.g. aluminum), sealed together at their edges, the corrugations running in directions differing by 90° in the two sheets, so that internal ribs are thereby provided which prevent collapse of the collector due to the external atmospheric pressure. A suitable internal volume of liquid 12 therein is 1 litre.

Fig. 4 illustrates an embodiment wherein a classical heat exchanger is not part of the system, but wherein instead the liquid 12 in the system circulates through a liquid-filled pool 100, which, in a sense, serves as a heat exchanger as well as an exchanger of the liquid 12. The pumping action is identical to that of the embodiment of Fig. 3. A lift tube 30' lifts warm liquid 12 from the solar heat collector 14 to a top end 66' of a liquid column 64'. Flow then occurs downwardly through a conduit 65' and enters the pool 100 below a surface 102 of the liquid 12 therein. A lift tube 30 lifts cold water from a different and distant position in the pool 100, via a column 34' to the condenser 41. Thus, double pumping action is attained.

The length of the columns 34' and 64' will normally be approximately 7.25 m so that liquid water 12 will boil at about 66°C, but the columns 34' and 64' could be made long enough to reduce the boiling temperature of the liquid 12 to precisely the temperature desired for the liquid 12 when it is in the pool 100. For example, the columns 34' and 64' can be made long enough to provide a temperature for the water 12 of 32°C. This will then serve as the limit or upper temperature which the pool 100 can attain.

While two lift tubes 30' and 30 are shown in Fig. 5, only one of these is absolutely necessary, although, of course, the pumping efficiency will be reduced if only one of the lift tubes 30' and 30 is utilized.

In operating the apparatus of Fig. 1, water 17 at ambient temperature (e.g. 15°C) can be used to initially enter tubing 18 of the heat exchanger; if this tubing is part of a domestic hot water supply, the temperature of that water will be raised until it is all hot, say at 70°C. Then if no hot water is drawn off, the level 60 of the cool circulating liquid 12 rises from the level shown in Fig. 1A to that shown in Fig. 1B, since as the steam in the condenser piping 42 cannot condense, the degree of vacuum decreases. A maximum boiling temperature within the collector 14 of 68°C is reached.

The system operates most efficiently to heat a liquid over a temperature difference of 35 to 75C degrees.

If thought desirable, a safety valve or conduit can be provided to vent any dangerous excess vapor pressure with the system.

The invention is particularly useful for providing a solar heating system for use in homes to provide hot water therefor through heat exchange to a hot water system, and for use in heating swimming pools or other recreational pools. The solar heating system is particularly advantageous in that it requires no external power to provide the pumping action and in that the working fluid can be non-toxic, preferably simply pure water, then preventing any problems created by leakage between the solar heating system and the fluid heated thereby (generally also water). The solar heating system 10 is self adjusting and it is not necessary to cover or uncover any part of it to control its proper operation. Cycling of the liquid in the system is continuous rather than intermittent. Further, the solar heating system can be made quite compact, particularly in the embodiment of Fig. 3.

In the present invention the means (c) for keeping the reduced pressure inside the collector is a means which does not include a pump or otherwise require external energy but which purely relies on atmospheric pressure and/or hydrostatic pressure.

## Claims

1. A solar heating system having (a) a solar heat collector (14) capable of containing a liquid, and conduits (20, 22) for connecting the collector to (b) a heat exchanger (16) or a pool (100) of liquid, whereby a liquid (12) can be heated in the collector and circulated through the conduits so as to be cooled and thereby to heat a liquid (17) in said heat exchanger or pool of liquid, the collector being placed at a level above the heat exchanger (16) or pool (100), whereby the liquid forms vapour (24) within the collector (14) when the collector is heated by the sun, and (c) one of said conduits (20) is provided for containing a column of said first liquid (12), the top of said column being in communication with the interior of the collector, whereby the vapour is able to lift cooled liquid (12) from the heat exchanger (16) or pool (100) to a condenser, characterised in that the system includes means for keeping the interior of the collector (14) at a reduced pressure such that the liquid therein forms said vapour (24), said means consisting of a second heat exchanger (41) arranged above the collector for condensation of said vapour (24) produced in the collector, and at least one lift tube (30) communicating at its lower end with the top of another of said conduits (22) and with the top of the interior of the collector and at its upper end with the condensing heat exchanger (41).

2. A system as claimed in Claim 1, wherein the top end of the conduit (22) for containing said column communicates with said collector (14) via the condensing heat exchanger (41).

3. A system as claimed in Claim 1 or 2, wherein the collector (14) is connected to the condensing heat exchanger (41) via the lift tube (30) and also by a further conduit (46) spaced apart from the lift tube.

4. A system as claimed in Claim 1, 2 or 3, wherein the lower end (26) of the conduit (22) for containing said column of liquid terminates within a chamber (61, 63) which can be sealed from the atmosphere by a closure (67) and which communicates via a conduit (36) with the interior of the first heat exchanger (16).

5. A system as claimed in Claim 1, 2, 3 or 4, which also includes a chamber (56) connected to the condensing heat exchanger (41) by means of a conduit (54) of which the open end (57) is positioned below the normal level (45) of liquid in the condenser (41), which end can be uncovered by excess pressure of vapor (24) in the condenser, and a conduit (55) arranged to allow gravity return of liquid (12), condensed in the chamber (56) to the condenser (41).

6. A system as claimed in any preceding claim, wherein the condensing heat exchanger (41) contains tubing (42) communicating at its one end (50) with the upper end of the lift tube (30) so as to receive vapor (24) from the lift tube, and at its other end (52) communicating with the solar collector (14) so that liquid (12) condensed in the tubing (42) is thereby returned by gravity feed to the collector.

7. A system as claimed in any preceding claim, wherein the condensing heat exchanger (41) contains a dam (44) to retain circulating liquid (13) at a level to cover heat exchange means (42) within the condenser (41).

8. A system as claimed in any of Claims 1 to 7, when installed for heating a domestic hot water system, which is connected to piping (18) within the heat exchanger (16).

9. A system as claimed in any of Claims 1 to 7, when installed for heating a swimming pool (100), into which conduits (34', 65') for the lift tube (30) and solar collector (14) are arranged to open at a level below the normal water level (102) in the pool.

10. A method of solar heating of a liquid using a system as claimed in any preceding claim having a liquid (12) in the collector (14) and condenser (41), and under a reduced pressure such that said liquid boils within the collector at below its normal temperature, by allowing the sun to heat the collector so that the liquid therein boils, and the vapor (24) generated lifts cooled liquid (12) into the condenser wherein the vapor is condensed and the liquid including condensed vapor return by gravity to the collector thereby displacing heated liquid (12) into the heat exchanger (16) or pool (100) and heating the liquid (17) or (102) therein.

## Patentansprüche

1. Sonnenheizsystem mit (a) einem Sonnenwärmekollektor (14) zur Aufnahme einer Flüssigkeit und Leitungen (20, 22) zum Verbinden des Kollektors mit (b) einen Wärmetauscher (16) oder einem Flüssigkeitsbecken (100), wodurch eine Flüssigkeit (12) im Kollektor erhitzt und durch die Leitungen umgewälzt werden kann, so daß sie sich abkühlen und dadurch eine Flüssigkeit (17) im Wärmetauscher oder Flüssigkeitsbecken erhitzen kann, wobei der Kollektor auf einen Niveau unterhalb des Wärmetauschers (16) oder des Beckens (100) angeordnet ist, wodurch die Flüssigkeit innerhalb des Kollektors (14) Dampf (24) ausbildet, wenn der Kollektor von der Sonne erhitzt wird, und (c) wobei eine der Leitungen (20) zur Aufnahme einer Säule der ersten Flüssigkeit (12) vorgesehen ist, deren Spitze mit dem Innern des Kollektors in Verbindung steht, wodurch der Dampf gekühlte Flüssigkeit (12) vom Wärmetauscher (16) oder Becken (100) zu einem Kondensator anheben kann, gekennzeichnet, durch eine Einrichtung zum Halten des Innern des Kollektors (14) auf einem verringerten Druck, so daß die Flüssigkeit darin den Dampf (24) ausbbildet, einen oberhalb des Kollektors angeordneten zweiten Wärmetauscher (41) zum Kondensieren des im Kollektor erzeugten Dampfes (24) und mindestens ein Hubrohr (30) das an seinem unteren Ende mit der Spitze einer weiteren der Leitungen (22) und mit der Spitze des Innern des Kollektors und an seinem oberen Ende mit dem Kondensations-Wärmetauscher (41) in Verbindung steht.

2. System nach Anspruch 1, dadurch gekennzeichnet, daß das obere Ende der Leitung (22) zur Aufnahme der Säule über den Kondensations-Wärmetauscher (41) mit dem Kollektor (14) in Verbindung steht.

3. System nach Anspruch 1 oder 2, dadurch gekennzeichnet, daß der Kollektor (14) mit dem Kondensations-Wärmetauscher (41) über das Hubrohr (30) und ebenfalls mittels einer weiteren, vom Hubrohr beabstandeten Leitung (46) verbunden ist.

4. System nach Anspruch 1, 2 oder 3, dadurch gekennzeichnet, daß das untere Ende (26) der Leitung (22) zur Aufnahme der Flüssigkeitssäule innerhalb einer Kammer (61, 63) endet, die mittels eines Verschlusses (67) von der Atmosphäre abgedichtet werden kann und über eine Leitung (36) mit dem Innern des ersten Wärmetauschers (16) in Verbindung steht.

5. System nach einem der Ansprüche 1, 2, 3 oder 4, ferner gekennzeichnet durch eine Kammer (56), die mit dem Kondensations-Wärmetauscher (41) mittels einer Leitung (54) verbunden ist, deren offenes Ende (57) unterhalb des normalen Niveaus (45) der Flüssigkeit im Kondensator (41) angeordnet ist, und durch überschüssigen Druck des Dampfs (24) im Kondensator abgedeckt werden kann, und durch eine Leitung (55), die die Rückführung der in der Kammer (56) kondensierten Flüssigkeit (12) zum Kondensator (41) aufgrund der Schwerkraft ermöglicht.

6. System nach einem der vorhergehenden Ansprüche, dadurch gekennzeichnet, daß der Kondensations-Wärmetauscher (41) eine Rohrleitung (42) aufweist, die an einem Ende (50) mit dem oberen Ende des Hubrohres (30) in Verbindung steht und Dampf (24) aus dem Hobrohr aufnimmt, und die mit ihrem anderen Ende (52) mit dem Sonnenkollektor (14) in Verbindung steht, so daß dadurch in der Rohrleitung (42) kondensierte Flüssigkeit (12) durch Schwerkraftfluß zum Kollektor rückgeführt wird.

7. System nach einem der vorhergehenden Ansprüche, dadurch gekennzeichnet, daß der Kondensations-Wärmetauscher (41) einen Damm (44) zum Zurückhalten umlaufender Flüssigkeit (12) auf einem Niveau zum Bedecken einer Wärmetauschereinrichtung (42) innerhalb des Kondensators (41) aufweist.

8. System nach einem der Ansprüche 1 bis 7 zum Erhitzen eines häuslichen Heißwassersystems, das mit einer Rohrleitung (18) innerhalb des Wärmetauschers (16) verbunden ist.

9. System nach einem der Ansprüche 1 bis 7 zum Erhitzen eines Schwimmbeckens (100), in das Leitungen (34', 65') für das Hubrohr (30) und den Sonnenkollektor (14) eingeführt sind, die sich auf einem Niveau unterhalb des normalen Wasserniveaus (102) im Becken öffnen.

10. Verfahren zum Aufheizen einer Flüssigkeit durch Sonnenwärme unter Verwendung eines Systems nach einem der vorhergehenden Ansprüche, mit einer Flüssigkeit (12) im Kollektor (14) und Kondensator (41) unter einem verringerten Druck, so daß die Flüssigkeit innerhalb des Kollektors unterhalb ihrer Normaltemperatur siedet, durch Erhitzen des Kollektors durch die Sonne, so daß die Flüssigkeit darin siedet, wobei der erzeugte Dampf (24) gekühlte Flüssigkeit (12) in den Kondensator anhebt, in dem der Dampf kondensiert, und die Flüssigkeit einschließlich kondensierten Dampfes aufgrund der Schwerkraft in den Kollektor zurückkehrt, wodurch erwärmte Flüssigkeit (12) in den Wärmetauscher (16) oder das Becken (100) verdrängt wird und die Flüssigkeit (17 oder 102) darin aufheizt.

**Revendications**

1. Un dispositif de chauffage solaire comportant (a) un capteur de chaleur solaire (14) pouvant contenir un liquide, et des conduites (20, 22) reliant ledit capteur à (b) un échangeur de chaleur (16) ou un bassin (100) de liquide, de sorte qu'un liquide (12) puisse être chauffé dans le capteur et mis en circulation à travers les conduites de manière à se refroidir et à chauffer ainsi un liquide (17) dans ledit échangeur de chaleur au bassin de liquide, ledit capteur étant placé à un niveau supérieur à celui de l'échangeur de chaleur (16) du bassin (100), de sorte que le liquide forme de la vapeur (24) dans le capteur (14) quand le capteur est chauffé par le soleil, et (c) l'une (20) desdites conduites est prévue pour contenir une colonne du liquide (12) cité en premier, le sommet de ladite colonne étant en communication avec l'intérieur du capteur, de sorte que la vapeur puisse élever le liquide (12) refroidi de l'échangeur de chaleur (16) ou de bassin (100) jusqu'à un condenseur, caractérisé en ce qu'il comprend des moyens pour maintenir à l'intérieur du capteur (14) une pression réduite telle que le liquide qui s'y trouve forme ladite vapeur (24), lesdits moyens consistant en un deuxième échangeur de chaleur (41) disposé au-dessus du capteur pour assurer la condensation de ladite vapeur (24) produite dans le capteur, et au moins un tube d'élévation (30) communiquant à son extrémité inférieure avec le sommet de l'autre conduite (22) et avec la partie supérieure de l'intérieur du capteur, et à son extrémité supérieure, avec l'échangeur de chaleur de condensation (41).

2. Un dispositif comme revendiqué dans la revendication 1, dans lequel l'extrémité supérieure de la conduite (22) contenant ladite colonne communique avec ledit capteur (14) par l'intermédiaire de l'échangeur de chaleur de condensation (41).

3. Un dispositif comme revendiqué dans la revendication 1 ou 2, dans lequel le capteur (14) est relié à l'échangeur de chaleur de condensation (41) par l'intermédiaire du tube d'élévation (30) ainsi que par une autre conduite (46) espacée dudit tube d'élévation.

4. Un dispositif comme revendiqué dans la revendication 1, 2 ou 3, dans lequel l'extrémité inférieure (26) de la conduite (22) contenant ladite colonne de liquide débouche dans une chambre (61, 63) qui peut être isolée de l'atmosphère d'une manière étanche par un élément d'obturation (67) et qui communique par l'intermédiaire d'une conduite (36) avec l'intérieur du premier échangeur de chaleur (16).

5. Un dispositif comme revendiqué dans la revendication 1, 2, 3 ou 4, qui comprend aussi une chambre (56) reliée à l'échangeur de chaleur de condensation (41) au moyen d'une conduite (54) dont l'extrémité ouverte (57) est située plus bas que le niveau normal (45) du liquide dans le condenseur (41), laquelle extrémité peut être découverte par un excès de pression de la vapeur (24) dans le condenseur, et une conduite (55) disposée de manière à permettre le retour par gravité du liquide (12), condensé dans la chambre (56), au condenseur (41).

6. Un dispositif comme revendiqué dans n'importe quelle revendication précédente, dans lequel l'échangeur de chaleur de condensation (41) contient un tube (42) communiquant à l'une (50) de ses extrémités avec l'extrémité supérieure du tube d'élévation (30) de manière à recevoir la vapeur (24) du tube d'élévation, et communiquant à son autre extrémité (52), avec le capteur solaire (14) de manière à ce que le liquide (12) condensé dans le tube (42) retourne par gravité dans le capteur.

7. Un dispositif comme revendiqué dans n'importe quelle revendication précédente, dans lequel l'échangeur de chaleur de condensation (41) contient un barrage (44) retenant le liquide (12) en circulation à un niveau recouvrant les moyens d'échange de chaleur (42) dans le condenseur (41).

8. Un dispositif comme revendiqué dans n'importe laquelle des revendications 1 à 7, quand il est installé pour le chauffage d'un système d'eau chaude domestique, qui est relié au tube (18) à l'intérieur de l'échangeur de chaleur (16).

9. Un dispositif comme revendiqué dans n'importe laquelle des revendications 1 à 7, quand il est installé pour le chauffage d'une piscine (100), dans lequel les conduites (34', 65') pour le tube d'élévation (30) et le capteur solaire (14), sont disposées de manière à déboucher à un niveau inférieur au niveau normal (102) de l'eau du bassin.

10. Un procédé de chauffage solaire d'un liquide, utilisant un dispositif comme revendiqué dans n'importe quelle revendication précédente comprenant un liquide (12) dans le capteur (14) et la condenseur (41), et sous une pression réduite telle que ledit liquide bouille dans ledit capteur en dessous de sa température normale, en permettant au soleil du chauffer le capteur de sorte que le liquide qui s'y trouve bouille, et la vapeur (24) produite élève le liquide (12) refroidi qui passe alors dans le condenseur où la vapeur se condense et le liquide, y compris la vapeur condensée, retourne par gravité au capteur en déplaçant ainsi le liquide (12) chauffé qui passe alors dans l'échangeur de chaleur (16) ou le bassin (100) et réchauffe le liquide (17) ou (102) s'y trouvant.

FIG. 1A

## FIG. 1B

FIG.2

FIG.4

FIG.3